Europäisches Patentamt

European Patent Office

Office européen des brevets

(19)

(11) Numéro de publication : **0 063 074**
**B1**

(12)

# FASCICULE DE BREVET EUROPÉEN

(45) Date de publication du fascicule du brevet :
18.09.85

(51) Int. Cl.⁴ : **F 16 F 15/30**

(21) Numéro de dépôt : 82400574.8

(22) Date de dépôt : 30.03.82

(54) **Rotor à haute vitesse de rotation notamment pour volant d'inertie.**

(30) Priorité : 14.04.81 FR 8107465

(43) Date de publication de la demande :
20.10.82 Bulletin 82/42

(45) Mention de la délivrance du brevet :
18.09.85 Bulletin 85/38

(84) Etats contractants désignés :
AT BE CH DE GB IT LI NL SE

(56) Documents cités :
FR-A- 2 082 274
FR-A- 2 282 737
FR-A- 2 434 968
FR-A- 2 436 267
FR-A- 2 458 005
US-A- 4 176 563

(73) Titulaire : SOCIETE NATIONALE INDUSTRIELLE
AEROSPATIALE Société dite:
37 Boulevard de Montmorency
F-75781 Paris Cedex 16 (FR)

(72) Inventeur : Abiven, Henri
14 Clos de Montcient Oinville
F-78250 Meulan (FR)
Inventeur : Beheydt, André
14 Rue Georges Clémenceau
F-78350 Jouy-en-Josas (FR)
Inventeur : Clermont, Michel
5 Ruelle aux Talbots
F-78200 Guernes (FR)
Inventeur : Delattre, Maurice
208 Rue de la Convention
F-75015 Paris (FR)
Inventeur : Poubeau, Pierre
6 Allée du Bois Domaine de Grandchamp
F-78230 Le Pecq (FR)

(74) Mandataire : Rinuy, Guy et al
Cabinet Rinuy et Santarelli 14, Avenue de la Grande
Armée
F-75017 Paris (FR)

Jouve, 18, rue St-Denis, 75001 Paris, France

## Description

On connaît les nombreuses applications des rotors à haute vitesse de rotation. Une des applications possibles est celle des volants d'inertie capables de stocker de l'énergie sous forme cinétique et de la restituer sous forme mécanique.

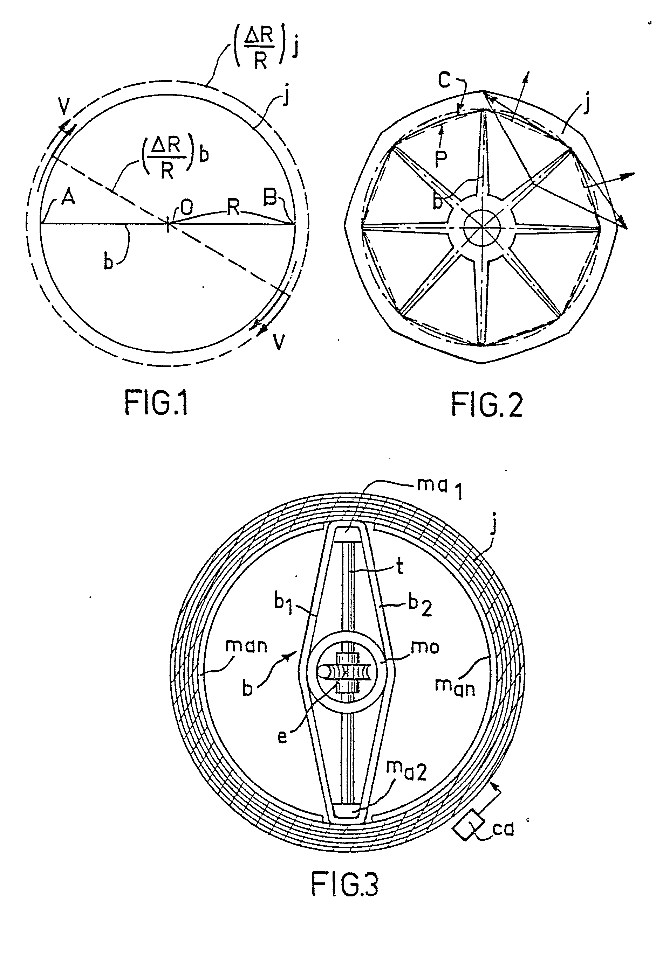

Avant d'aller plus avant dans la description de la présente invention, on rappellera tout d'abord, très succinctement, en se référant à la figure 1 l'un des problèmes de base théorique que pose la structure des rotors.

On considérera à cet effet une jante mince j de rayon R centrée en O et une barre de liaison b de longueur 2R centrée également sur O sur laquelle la jante j repose à l'arrêt. Si l'on suppose que la jante j et la barre b sont constituées de matériaux présentant la même masse spécifique ρ et le même module d'élasticité E, et si l'on examine les allongements de la jante j et de la barre b pour des vitesses de rotation égales impliquant la même vitesse périphérique V pour la jante et pour les extrémités A et B de la barre de liaison, on voit que :

a) la contrainte dans la jante j est $\sigma_1 = \rho V^2$ et que l'allongement correspondant est :

$$(\Delta R/R)j = (\rho/E) \, V^2$$

b) la contrainte dans la barre b, qui est nulle aux points A et B, croît jusqu'à un maximum au centre O dont la valeur est $\sigma_2 = 1/2 \, \rho V^2$ et que l'allongement correspondant sur la longueur d'un rayon est :

$$(\Delta R/R)b = 1/3 \, (\rho/E) \, V^2$$

En comparant les relations ci-dessus concernant les allongements, on constate que l'allongement dans la barre est le tiers de l'allongement dans la jante et que par conséquent on ne peut pas centrer la jante j par la barre b sans obligatoirement introduire des liaisons aux points A et B, lesquelles liaisons vont elles-mêmes introduire des contraintes pour assurer la coïncidence des points de contact barre-jante.

La Demanderesse a mis au point une technique qui a évolué au fur et à mesure de ses études, pour tenter de résoudre de façon définitive le problème de structure de base des rotors à haute vitesse de rotation, plus particulièrement ceux destinés à être utilisés en tant que volant d'inertie pour des applications de stockage-récupération d'énergie.

La Demanderesse a tout d'abord révélé pour la première fois les rotors subcirculaires dans son brevet français N° 2.082.274 du 9 mars 1970. On rappellera brièvement que le concept subcirculaire est basé sur le principe suivant : l'allongement de la jante j (voir figure 2) correspondant à un changement de forme et non à une augmentation de diamètre, entre la forme pseudopolygonale initiale au repos P et le cercle extérieur C dont le rayon est celui des voiles de support b de la jante. Il est ainsi possible d'utiliser pour la jante un matériau qui présente un allongement relatif plus grand que celui accepté par les bras, soit du fait de leur module, soit du fait de leur forme. De plus, en agissant sur la forme de la jante lors de sa mise en place sur les bras on peut doser la contrainte que la jante applique sur les bras. Celle-ci dépend, entre autres paramètres, de la forme de la jante, une fois mise en place sur le bras. Il en résulte une certaine subcircularité résiduelle à la vitesse maximale dont dépend le niveau de compression sur le bras, comme cela apparaît d'ailleurs à la lecture du schéma de la figure 2. Cette compression de la jante sur les bras favorise leur solidarisation déjà effectuée, par exemple, au moyen d'un collage.

Il y a lieu de noter que cette solution, appliquée aux jantes de petit diamètre, reste valable pour des épaisseurs relativement faibles, de l'ordre de 10 % du rayon. Par contre, pour des jantes plus épaisses et pour des rotors de plus grand diamètre, pour des jantes plus épaisses et pour des rotors de plus grand diamètre on est amené à dissocier la jante en plusieurs couches, avec ou sans cales intermédiaires. Cette technique rend difficile le maintien d'un bon équilibrage du rotor dans toute la plage de vitesse, compte tenu de l'accumulation des tolérances mécaniques d'assemblage constituant les jantes en matériau composite. De plus, la complexité d'assemblage accroît considérablement le coût de conception et de fabrication.

La Demanderesse a présenté son brevet français N° 2.434.968 du 29 août 1978 une solution différente mettant en œuvre les effets d'inertie d'une masse additionnelle permettant l'allongement des bras de telle sorte que cet allongement soit compatible avec celui d'une jante initialement circulaire.

Le principe de cette solution a été schématisé sur la figure 3 sur laquelle on retrouve la combinaison d'une jante j, d'un moyeu $m_o$ d'au moins un bras de liaison b à deux branches $b_1$, $b_2$ entourant ledit moyeu. Des masses $ma_1$ et $ma_2$ sont localisées aux extrémités du bras b de façon que, en cours de rotation, elles assurent la solidarisation, par pression, entre le bras et la jante, d'une part, et par traction sur les branches entre le bras et le moyeu, d'autre part. Des masses anisotropes $ma_n$ réparties entre les bras conservent constante la circularité de la jante. L'équilibrage statique et dynamique est assuré par action de moyens électromécaniques e et t agissant différentiellement sur les masses localisées $ma_1$, $ma_2$, à partir de capteurs $c_a$.

Cette solution présente plusieurs difficultés d'application, parmi lesquelles on peut citer :

— le niveau de précision et de stabilité du centrage des bras est difficilement compatible avec la nécessité d'un bon équilibrage par collage ;

— il n'est pas possible de compenser une dissymétrie des deux demi-bras due à une dispersion des caractéristiques des matériaux ;

— la liaison entre les bras et le moyeu central par collage et la forme même des bras se prêtent mal au passage de couples relativement importants en raison de l'effet de décollement dit « peeling ».

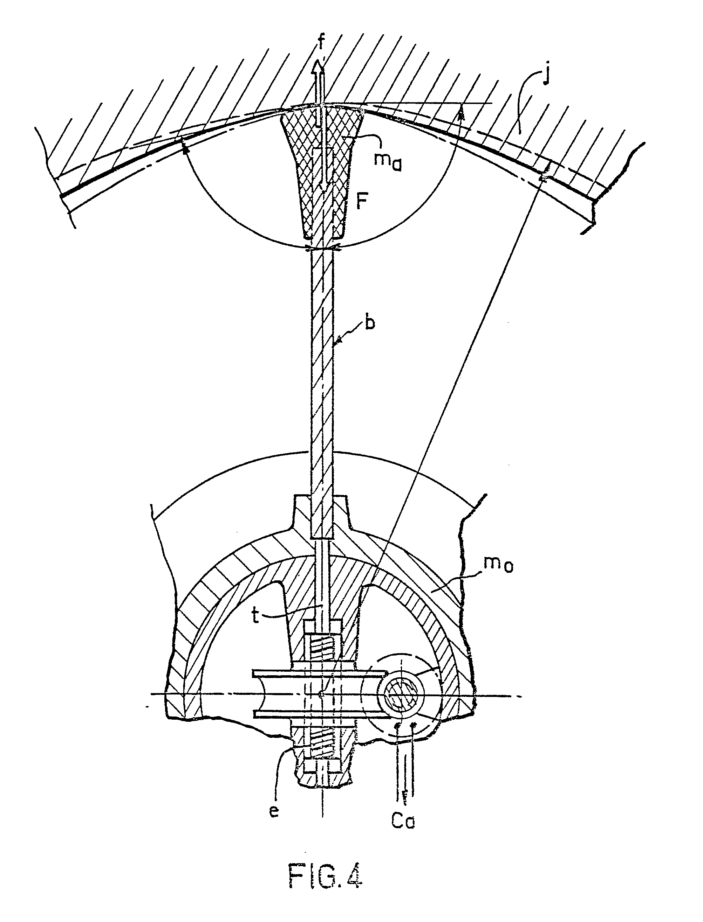

La Demanderesse a présenté dans son brevet français N° 2.484.005 du 29 Mai 1979 une solution différente de la réalisation d'un rotor de type subcirculaire à moyeu-voile-jante. On rappellera brièvement en se référant à la figure 4 que cette solution consiste à réduire les contraintes radiales dans les voiles b en dissociant le système moyeu $m_o$-voiles b recevant en appui la paroi de la jante subcirculaire j, puis en localisant la masse principale $m_a$ desdits voiles vers la jante, de telle sorte que la force centrifuge f qui en résulte vienne en déduction de la force de compression radiale F dirigée vers l'axe de rotation, ce qui permet de diminuer les forces de compression s'exerçant sur chaque voile.

Là encore, le rotor peut être équilibré en agissant différentiellement par l'action d'un système électromécanique e, t, à partir d'informations de capteurs $c_a$.

Cette solution présente elle aussi les difficultés d'application inhérentes aux jantes de type subcirculaire mentionnées précédemment.

La présente invention concerne un rotor à haute vitesse plus particulièrement applicable à un volant d'inertie, qui constitue une synthèse améliorée des systèmes antérieurs de la Demanderesse dont il a été question ci-dessus. Ce rotor permet non seulement d'éliminer les inconvénients inhérents à chacun des systèmes antérieurs, pris en soi, mais encore apporte des avantages importants qui ressortiront au fur et à mesure de la description détaillée de l'invention qui va être faite plus loin.

L'invention propose à cet effet un rotor à haute vitesse, plus particulièrement applicable à un volant d'inertie, du genre comportant, comme le propose le document FR 2.434.968, un moyeu, une jante et une pluralité de bras de liaison dont chacun affecte la forme d'une boucle très allongée dont une extrémité externe porte constamment contre la jante sur laquelle elle est assemblée avantageusement par collage, une masse étant incluse à l'intérieur de ladite extrémité externe en vue d'en provoquer l'allongement désiré sous l'effet de la force centrifuge et assurer un contact constant entre bras et jante, ce rotor étant caractérisé par rapport à ce document précité en ce que lesdits bras sont radiaux et que les côtés des boucles qui les constituent comportent des parties rectilignes et en ce que les extrémités internes de ces bras, indépendantes les unes des autres, sont centrées et maintenues contre la force centrifuge par un élément central faisant partie du moyeu.

Suivant une caractéristique particulièrement avantageuse de l'invention, les bras de liaison sont réalisés par bobinage, sur un mandrin adapté, de matériaux composites filamentaires tels que fibres de verre, de carbone, de polymères, de bore, d'acier ou analogues.

Il apparaît dès maintenant que ce type de centrage de la jante par rapport au moyeu permet d'appareiller les paires de bras opposés de façon à avoir exactement les mêmes caractéristiques de masses et d'allongement. Il en résulte donc une possibilité réelle de maintenir l'équilibre dynamique du rotor dans toute la plage des vitesses de rotation, de la vitesse nulle à la vitesse maximale, ce qui n'était pas possible entre les systèmes antérieurs. Par ailleurs, la fixation des bras sur le moyeu permet de conduire à une bien meilleure précision.

Bien entendu la masse d'extrémité des bras est dimensionnée de telle sorte que l'extrémité du bras côté jante soit toujours en appui sur la jante, ce qui conduit à une certaine subcircularité de la jante, en cours de rotation, et renforce donc la solidarisation bras-jante tout en maintenant l'avantage des bras restant en tension.

D'autres caractéristiques, avantages et particularités de la présente invention ressortiront de la description qui en est donnée ci-après en référence aux dessins annexés représentant, schématiquement et simplement à titre d'exemple, différentes formes de réalisation possibles de ladite invention.

Sur ces dessins, et comme on l'a vu dans le préambule :

la figure 1 est un schéma explicatif des problèmes de base posés par la structure des rotors à haute vitesse, tandis que

les figures 2, 3 et 4 sont des schémas explicatifs permettant d'exposer l'évolution de l'état de la technique antérieure, mise au point par la Demanderesse pour résoudre une partie des problèmes précités posés par les rotors à haute vitesse ;

Par ailleurs :

les figures 5 et 6 sont des vues en perspective représentant deux formes de réalisation possibles du principe de base d'un ensemble bras, jante, moyeu dont les éléments constitutifs sont combinés conformément à la présente invention ;

la figure 7 est une vue de détail en perspective représentant la partie de la couronne centrale continue faisant partie du moyeu qui doit servir d'appui à l'extrémité du bras, dans la forme de réalisation de la figure 6 ;

la figure 8 est une vue de détail en perspective d'une variante de réalisation de la jonction entre l'extrémité du bras et la jante ;

les figures 9 et 10 sont des vues en perspective représentant une variante de réalisation possible de la couronne centrale faisant partie du moyeu, respectivement au cours de son montage et une fois terminée, cette couronne pouvant être utilisée lorsque le bras ne peut pas être ouvert à l'une de ses extrémités pour des raisons de niveaux de contraintes mécaniques ;

la figure 11 est une vue en coupe longitudinale axiale d'un ensemble rotor conforme à la présente invention ;

la figure 12 en est une vue du dessus ;

la figure 13 est une vue en coupe longitudinale axiale d'une variante de réalisation d'un ensemble rotor selon l'invention ;

la figure 14 est une vue de détail représentant, en coupe longitudinale axiale, une variante de réalisation de l'invention, dans laquelle on utilise avantageusement des matériaux dont les modules d'élasticité longitudinaux E et les masses spécifiques ρ conduisent à des valeurs différentes du rapport E/ρ pour les bras d'une part et la jante d'autre part ;

la figure 15 est une vue de détail représentant une autre variante de réalisation dans laquelle l'extrémité du bras vient porter contre la jante par l'intermédiaire d'un matériau permettant d'assurer la compatibilité de la liaison entre la jante qui subit un allongement circonférentiel important et la pièce d'extrémité du bras ;

les figures 16, 17 et 18 sont des schémas explicatifs permettant de montrer trois modes de réalisation possibles du montage d'un rotor selon l'invention par rapport au bâti, au moyen, par exemple de roulements à billes ou d'autres types de paliers.

D'une façon générale, dans la solution conforme à la présente invention la liaison entre la jante et le moyeu est réalisée au moyen de bras ou rayons constitués de la manière exposée ci-après à partir de l'utilisation principale mais non exclusive de matériaux composites filamentaires.

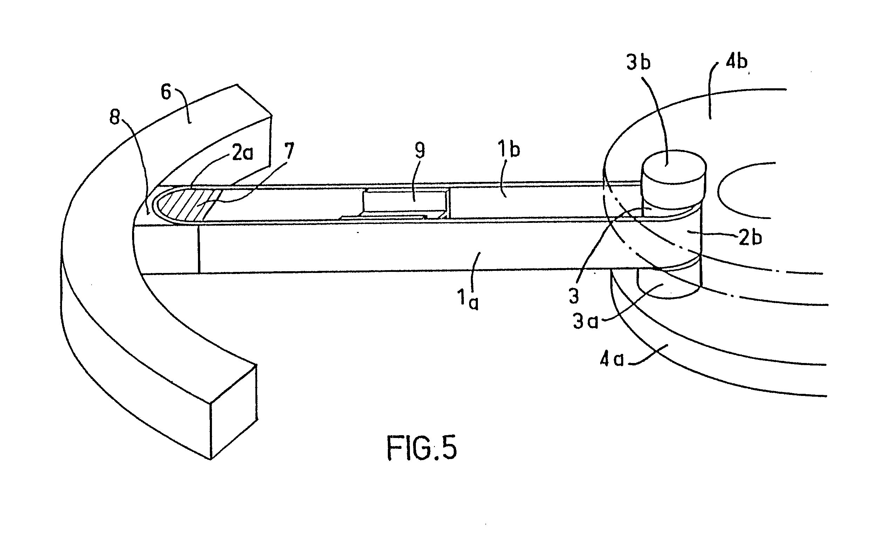

Plus particulièrement, chaque bras est constitué, comme cela apparaît sur les figures 5, 6 et 7, par bobinage, sur un mandrin adapté, de matériaux composites filamentaires tels que fibre de verre, de carbone, de polymères, de bore, d'acier, etc. qui donne audit bras la forme générale d'une boucle allongée dont les deux côtés comportent des parties rectilignes.

En d'autres termes, le bras est constitué de deux plaques minces 1a et 1b réunies à leurs extrémités par des éléments arrondis 2a et 2b, étant à noter que ces éléments arrondis peuvent être circulaires mais peuvent avantageusement aussi avoir une forme allongée optimisée, dite forme de Cornu, afin d'améliorer la répartition des contraintes mécaniques dans la zone de liaison entre le bras et la pièce avec laquelle il est en contact.

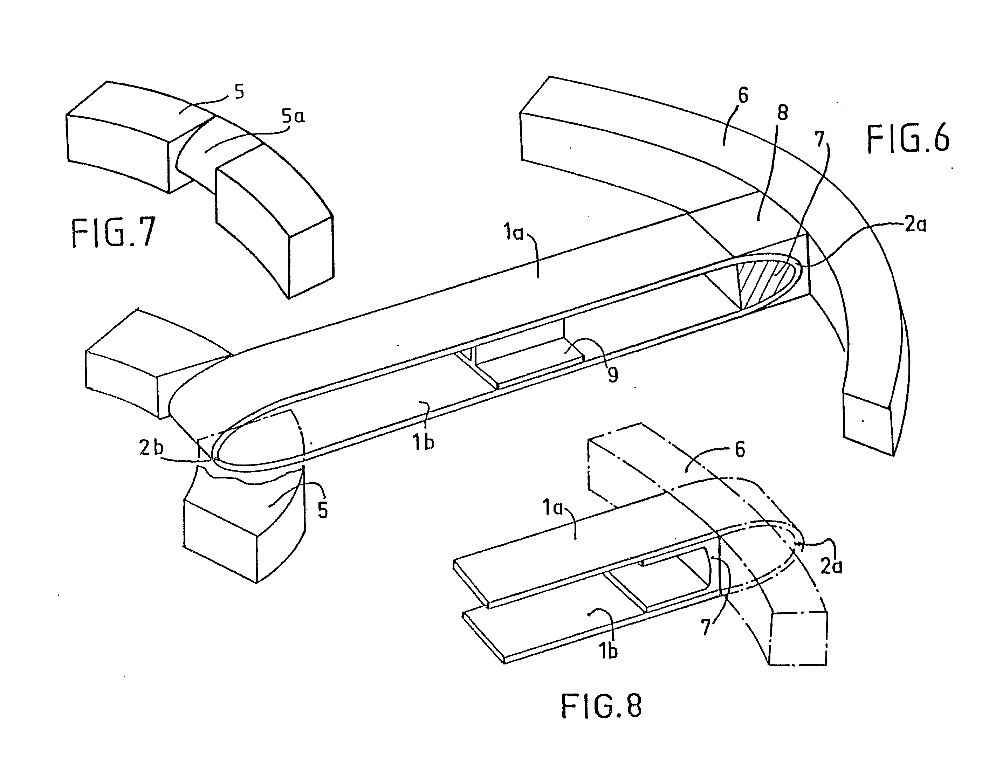

Si l'on compare les figures 5 et 6, on constate que le plan médian de symétrie longitudinale des bras peut, soit contenir l'axe de rotation du rotor (figure 5), soit être perpendiculaire à cet axe de rotation (figure 6).

Dans le cas de la figure 5, l'extrémité allongée 2b de chaque bras situé du côté du centre du volant vient porter pour son appui sur une pièce d'adaptation 3 parallèle à l'axe de rotation de l'ensemble et fixée, de part et d'autre du bras, par ses deux extrémités 3a et 3b dans deux flasques 4a et 4b constituant une partie du moyeu. Cet ensemble de fixation est évidemment dimensionné de façon à pouvoir tenir la force centrifuge appliquée au bras et comporte dans sa partie centrale une surface d'appui complémentaire de l'extrémité 2b du bras.

Dans le cas où le plan des bras est perpendiculaire à l'axe représenté sur la figure 6, l'extrémité 2b de chaque bras située du côté du centre du volant vient porter, pour son appui, sur une couronne circulaire 5 qui tient l'ensemble des bras contre la force centrifuge qui les sollicite et qui les centre, cette couronne circulaire constituant une partie du moyeu du volant. La liaison entre les bras et la couronne est assurée avantageusement par collage.

Pour éviter d'avoir à aménager à l'extrémité 2b du bras une pièce supplémentaire destinée à adapter la forme du bras en cette extrémité pour son appui sur une couronne circulaire, on peut avantageusement adopter la réalisation représentée sur la figure 7. Suivant cette dernière, la couronne circulaire 5 comporte, aux endroits où les différents bras doivent venir s'appliquer, des portées 5a qui sont usinées exactement à la forme interne d'appui de l'extrémité 2b du bras.

Dans les deux formes de réalisation des figures 5 et 6, chaque bras reçoit, au niveau de l'extrémité 2a située du côté de la jante 6, d'une part une pièce interne 7 dont la masse est définie de façon à provoquer un allongement du bras adapté à celui de la jante 6, d'autre part, une seconde pièce externe 8 qui a pour effet d'assurer l'adaptation des formes permettant une liaison par collage avec la jante 6.

Dans les deux formes de réalisation des figures 5 et 6, chacun des bras peut avantageusement être équipé de raidisseurs, tel que celui représenté en 9, qui ont pour effet d'augmenter la raideur de la fixation de la jante par rapport au moyeu, soit en couple si la forme de réalisation de la figure 5 est mise en œuvre, soit dans le sens axial si la forme de réalisation de la figure 6 est appliquée.

Dans la forme de réalisation de la figure 6, il est important de noter que le fait que le bras puisse être ouvert ou non ouvert à l'une de ses extrémités et plus particulièrement à l'extrémité côté jante, entraîne les conséquences ci-après exposées.

Dans le cas où l'extrémité du bras peut être ouverte, notamment côté jante, on peut, d'une part, utiliser une couronne centrale circulaire 5 continue, d'autre part, tronquer complètement l'extrémité arrondie 2a et faire porter directement la pièce interne 7 contre la jante 6, comme représenté sur la figure 8. Cette réalisation permet d'éliminer la seconde pièce d'adaptation 8 et d'obtenir une parfaite liaison par collage entre bras et jante.

Si, par contre, le bras ne peut pas être ouvert à une extrémité pour des raisons de niveaux de contraintes mécaniques, on ne peut évidemment pas adopter la réalisation de la figure 8 mais, de plus, la couronne centrale de fixation doit pouvoir s'ouvrir lors du montage des bras.

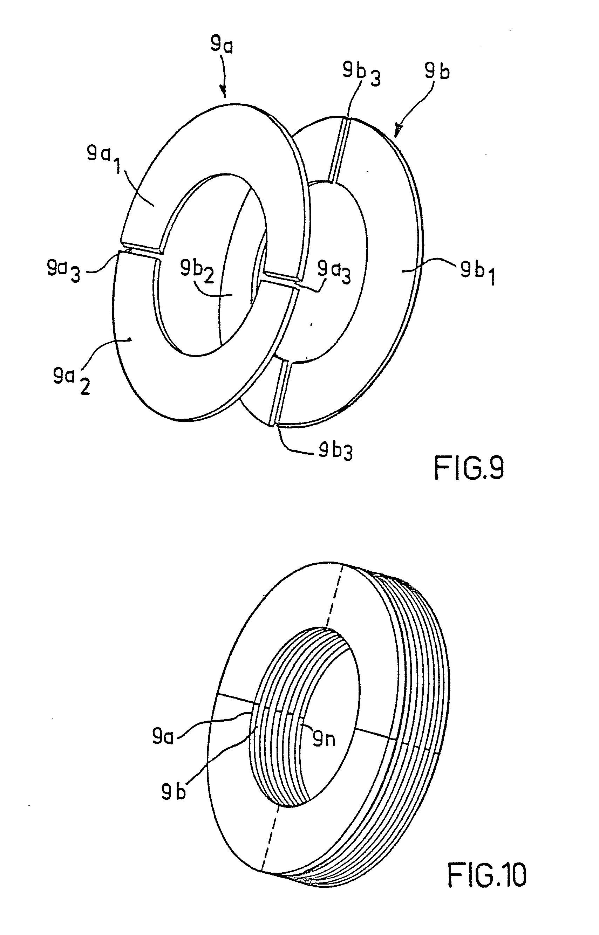

On peut alors avantageusement appliquer à cet effet la forme de réalisation, schématisée sur les figures 9 et 10. Dans ce cas, la couronne centrale de fixation est constituée d'un nombre approprié de couronnes élémentaires minces 9a, 9b...9n assemblées entre elles par collage. Par ailleurs, chacune des couronnes élémentaires est constituée de deux demi-secteurs minces $9a_1$, $9a_2$ pour la couronne élémentaire 9a et $9b_1$, $9b_2$ pour la couronne élémentaire 9b. Les demi-secteurs constituant une couronne élémentaire sont assemblés par collage, étant à noter que les lignes de collage $9a_3$ de la couronne élémentaire 9a et les lignes de collage $9b_3$ de la couronne élémentaire 9b sont décalées de 90° les unes par rapport aux autres lorsque les couronnes élémentaires 9a et 9b sont assemblées entre elles par collage et ainsi de suite jusqu'à l'assemblage de la couronne élémentaire 9n.

Le nombre des bras peut être adapté à chaque configuration définitive du rotor à haute vitesse. C'est ainsi que si la jante a une certaine hauteur, on sera amené à utiliser au moins deux ensembles de bras, un à chaque extrémité de la jante, ou même un plus grand nombre d'ensembles de bras selon la hauteur de ladite jante.

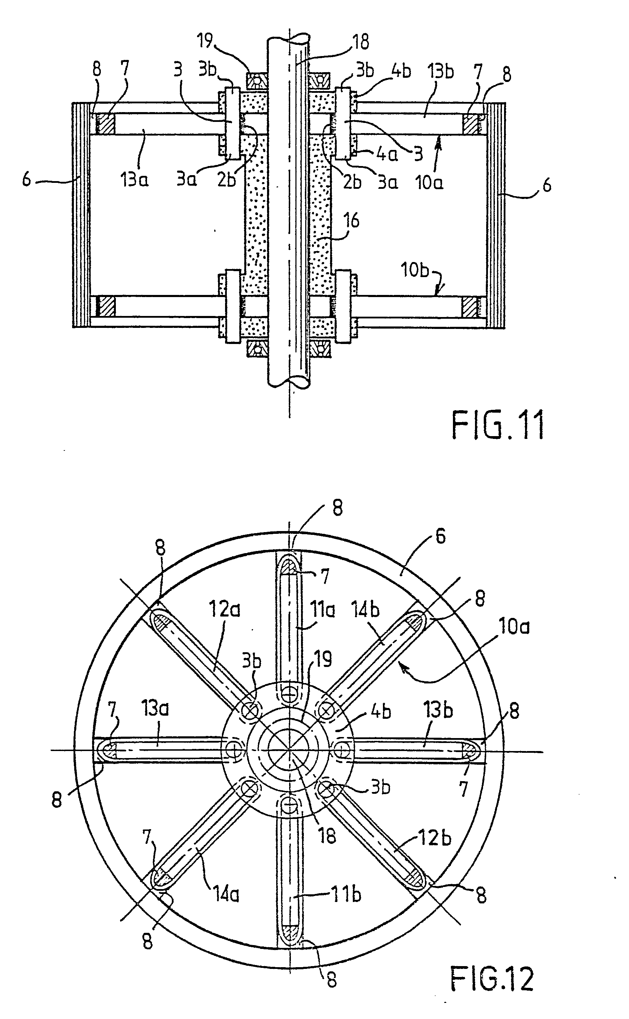

On a représenté sur les figures 11 et 12, à titre d'exemple nullement limitatif, comment peut être réalisé un rotor à haute vitesse pour volant d'inertie conforme à la présente invention.

La hauteur de la jante 6 nécessite, en l'occurrence, l'emploi de deux ensembles de bras 10a et 10b montés aux deux extrémités de ladite jante. Chaque ensemble est ici constitué de huit bras appareillés par paires de bras opposés : 11a, 11b, 12a, 12b, 13a, 13b et 14a, 14b. Chacun des bras est ici du type de la figure 5 et la couronne centrale est ici constituée de deux flasques 4a et 4b réunis entre eux par des pièces d'adaptation 3, 3a, 3b sur lesquelles portent les extrémités internes 2b des bras. Le flasque interne 4a fait partie du moyeu 16. L'arbre central 18 est ici tournant et solidaire dudit moyeu 16. Des roulements 19 permettent de monter l'ensemble dans un bâti comme on le verra en détail.

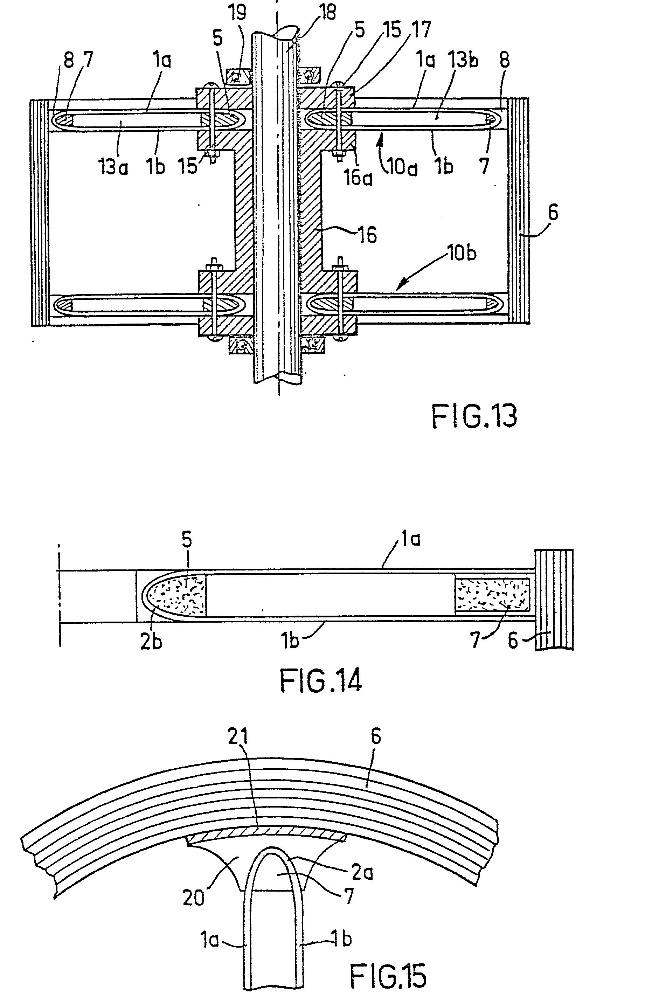

Par ailleurs, il est bien évident que l'on pourrait utiliser tout aussi bien des bras du type de celui de la figure 6 comme cela est schématisé à titre d'exemple sur la figure 13.

Dans ce cas la couronne centrale circulaire de fixation 5 est continue. Cette couronne qui fait partie du moyeu est fixée par des attaches 15 entre l'épaulement 16a de la partie médiane du moyeu 16 et une couronne extérieure 17. L'arbre central 18 est encore ici solidaire du moyeu 16 et des roulements 19 permettent de monter l'ensemble dans un bâti.

L'on pourrait encore utiliser des bras du type de celui de la figure 8. C'est ainsi que l'on peut mettre en valeur la caractéristique de l'invention suivant laquelle on utilise pour la constitution des bras des matériaux composites filamentaires. Dans cette éventualité on peut avantageusement appliquer la variante de réalisation représentée sur la figure 14 dans laquelle l'extrémité du bras, côté jante, est collée directement contre la jante et dans laquelle on utilise avantageusement des matériaux dont les modules d'élasticité longitudinaux E et les masses spécifiques ρ conduisent à

des valeurs différentes du rapport E/ρ pour les bras d'une part et la jante d'autre part.

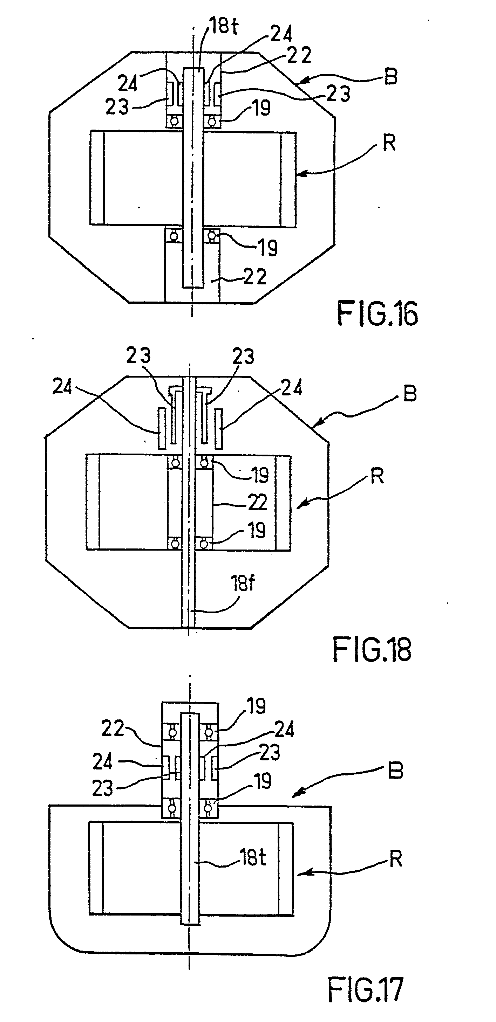

Pour assurer la comptabilité de la liaison entre la jante qui subit un allongement circonférentiel important et la pièce d'extrémité du bras on peut avantageusement adopter le mode de réalisation représenté sur la figure 15.

Dans ce cas, le bras est par exemple du type de celui représenté sur la figure 5 dans lequel la pièce d'adaptation 8 est ici remplacée par une pièce 20 qui englobe l'extrémité 2a du bras contenant la masse interne 7, cette pièce 20 étant munie à son extrémité en contact avec la jante 6 d'une plaque 21 constituée d'un matériau dont les caractéristiques d'allongement sont telles qu'il puisse rester d'un côté solidarisé avec la pièce 20 sans allongement tangentiel au niveau de ce contact et de l'autre côté rester solidarisé avec la jante en acceptant son allongement tangentiel, cela quel que soit cet allongement, dans toute la plage de vitesse. Cette plaque 21 peut être constituée d'une résine ou d'un élastomère avantageusement armé de fibre de verre, de carbone, de polymère, etc. La plaque 21 est ainsi collée d'un côté sur la pièce 20 et de l'autre sur la jante 6. Suivant une variante non représentée, la pièce 20 peut être munie à son extrémité d'un empilage de feuilles minces d'un matériau capable d'un grand allongement, tel que « Mylar » « Kapton » ou analogues auto-adhésif sur ses deux faces ou avec encollage des feuilles entre elles et sur la jante et la pièce 20.

On a décrit précédemment en référence aux figures 11 et 12 et 13 comment pouvait être réalisé conformément à l'invention un ensemble rotor à haute vitesse plus particulièrement pour volant d'inertie.

On va maintenant décrire, succinctement, en se référant aux figures très schématiques 16, 17 et 18, trois modes de réalisation possibles du montage d'un rotor selon l'invention désigné par la référence générale R par rapport à un bâti formant carter désigné par la référence générale B, au moyen de paliers mécaniques, par exemple des roulements à billes ou analogues.

Il est bien évident que le problème serait du même ordre en remplaçant les paliers mécaniques en question par des paliers magnétiques, moyennant les adaptations électromagnétiques inhérentes auxdits paliers magnétiques.

Ceci étant, il y a lieu de noter l'existence de deux types de suspension, à savoir : la suspension avec arbre central tournant 18t des figures 16 et 17 et la suspension avec arbre central fixe 18f de la figure 18.

Dans le cas de la figure 16, l'arbre central 18t qui est solidaire du moyeu du rotor R est monté de part et d'autre dudit rotor dans les éléments mobiles de deux roulements 19 dont les éléments fixes sont solidaires de deux cylindres 22 constitutifs du bâti.

Bien évidemment l'un au moins des cylindres 22, le supérieur par exemple, sert de carter au moteur-générateur électrique d'un type quelconque connu dont les éléments électromagnétiques fixes 23 sont solidaires du cylindre 22 et les éléments électromagnétiques mobiles 24 solidaires de l'arbre central tournant 18t.

Suivant une variante, on peut bien entendu agencer un moteur dans le cylindre supérieur et un générateur dans le cylindre inférieur.

Sans entrer dans des détails inutiles qui ne font pas partie de l'invention, on rappellera brièvement que le moteur permet d'entraîner le rotor formant volant d'inertie à haute vitesse pour stocker de l'énergie sous forme cinétique. Cette énergie cinétique est restituée sous forme électrique par le générateur ou même sous forme mécanique par l'arbre tournant entraîné par le rotor sur son énergie cinétique.

Suivant la variante de réalisation représentée sur la figure 17, l'arbre central tournant 18t sur lequel est calé le rotor R formant volant d'inertie est supporté en porte-à-faux par deux roulements 19 montés aux deux extrémités d'un cylindre 22 monté à la partie supérieure du bâti. Bien entendu un moteur-générateur électrique 23-24 est monté dans ledit cylindre 22 et l'ensemble fonctionne de la même manière que la forme de réalisation de la figure 16 décrite précédemment.

Dans le cas de la figure 18, la suspension est ici à arbre central fixe 18f.

Dans cette forme de réalisation, l'arbre 18f est fixé à ses deux extrémités dans l'axe du bâti B, tandis que le rotor R est solidaire d'un cylindre central 22 lui-même solidaire des éléments mobiles des roulements 19 dont les éléments fixes sont solidaires de l'arbre central fixe 18f.

Bien entendu, dans ce cas les éléments électromagnétiques fixes 23 du moteur-générateur sont solidaires de l'arbre central fixe 18t alors que les éléments électromagnétiques mobiles 24 de ce moteur sont solidaires du rotor R.

Bien évidemment, l'ensemble de la figure 18 fonctionne de manière tout à fait analogue à celle décrite précédemment.

Il va de soi que la présente invention n'a été décrite et représentée qu'à titre d'exemple préférentiel et qu'on pourra y apporter des équivalences techniques dans ses éléments constitutifs sans pour autant sortir du cadre de l'invention défini dans les revendications annexées.

**Revendications**

1. Rotor à haute vitesse plus particulièrement applicable à un volant d'inertie, du genre comportant un moyeu (16), une jante (6) et une pluralité de bras de liaison (10a, 10b, ... 13a, 13b) dont chacun affecte la forme d'une boucle très allongée dont une extrémité externe porte constamment contre la jante sur laquelle elle est assemblée avantageusement par collage, une masse étant incluse à l'intérieur de ladite extrémité externe en vue d'en provoquer l'allongement désiré sous l'effet de la force centrifuge et assurer un contact constant entre bras et jante, caractérisé en ce que lesdits bras (10a, 10b, ... 13a, 13b) sont radiaux et que les côtés des boucles qui les constituent comportent des parties rectilignes (1a, 1b) et en ce que les extrémités internes (2b) de ces bras, indépendantes les unes des autres, sont centrées et maintenues contre la force centrifuge par un élément central (5, 4a, 4b) faisant partie du moyeu (16).

2. Rotor selon la revendication 1, caractérisé en ce que les bras de liaison sont réalisés par bobinage sur un mandrin approprié de matériaux composites filamentaires tels que fibre de verre, de carbone, de polymères, de bore, d'acier ou analogues.

3. Rotor selon l'une quelconque des revendications 1 ou 2, caractérisé en ce que chacun des bras est constitué de deux plaques minces (1a, 1b) réunies à leurs extrémités par des éléments arrondis de forme allongée (2a, 2b), le plan de symétrie longitudinal du bras contenant l'axe de rotation du moyeu (16).

4. Rotor selon l'une quelconque des revendications 1 ou 2, caractérisé en ce que chacun des bras est constitué de deux plaques minces (1a, 1b) réunies à leurs extrémités par des éléments arrondis de forme allongée (2a, 2b), le plan de symétrie longitudinal du bras étant perpendiculaire à l'axe de rotation du moyeu (16).

5. Rotor selon la revendication 3, caractérisé en ce que l'extrémité de chaque bras (2b) du côté du centre vient porter, pour son appui, sur une pièce d'adaptation (3) parallèle à l'axe de rotation du moyeu, qui est fixée par ses extrémités (3a, 3b) dans deux flasques (4a, 4b) perpendiculaires à l'axe de rotation du moyeu et faisant partie dudit moyeu.

6. Rotor selon la revendication 4, caractérisé en ce que l'extrémité de chaque bras (2b) du côté du centre vient porter, pour son appui, sur une couronne centrale circulaire (5) qui fait partie du moyeu et qui tient l'ensemble des bras du rotor contre la force centrifuge et les centres.

7. Rotor selon la revendication 6, caractérisé en ce que la couronne de fixation (5) est continue et l'une des extrémités (2a, 2b) des bras, de préférence celle du côté de la jante (6), est ouverte pour permettre l'introduction des bras sur la couronne centrale de fixation (5) puis refermée avant fixation par collage sur la jante.

8. Rotor selon la revendication 6, caractérisé en ce que l'on utilise une couronne centrale de fixation des bras constituée à partir de demi-couronnes élémentaires minces ($9a_1$, $9a_2$, $9b_1$, $9b_2$ ..) permettant l'assemblage définitif avec les bras par collage lorsque lesdites couronnes élémentaires (9a ... 9n) ont été assemblées elles-mêmes par collage.

9. Rotor selon l'une quelconque des revendications 3 à 8, caractérisé en ce que l'on équipe les bras de raidisseurs (9) agencés entre les plaques minces (1a, 1b).

10. Rotor selon l'une quelconque des revendications 1 à 9, caractérisé en ce qu'on utilise des matériaux dont les modules d'élasticité longitudinaux E et les masses spécifiques $\rho$ conduisent à des valeurs différentes du rapport $E/\rho$ pour les bras d'une part et la jante d'autre part afin d'assurer un allongement du bras exactement adapté à celui de la jante.

11. Rotor selon l'une quelconque des revendications 1 à 9, caractérisé en ce que l'extrémité des bras (2a) devant venir porter contre la jante (6) comporte une pièce d'adaptation (8) permettant un bon appui et un assemblage par collage avec la jante (6).

12. Rotor selon l'une quelconque des revendications 1 à 9, caractérisé en ce que l'extrémité des bras (2a) devant venir porter contre la jante (6) comporte une pièce d'adaptation (20, 21) comprenant un matériau permettant d'assurer la compatibilité de la liaison entre la jante (6) qui subit un allongement circonférentiel important et la masse d'extrémité (7) du bras.

13. Rotor selon l'une quelconque des revendications 4 et 6 à 8, caractérisé en ce que l'on usine la couronne centrale circulaire (5) en des endroits appropriés (5a) pour servir de surfaces d'appui respectives aux extrémités internes des bras.

14. Rotor selon l'une quelconque des revendications 1 à 13, caractérisé en ce que, dans le cas où la hauteur de la jante le nécessite, on utilise au moins deux ensembles identiques (10a, 10b) de bras appareillés (13a, 13b), un ensemble à chaque extrémité de la jante (6).

**Claims**

1. A high speed rotor more especially applicable to an inertia wheel and of the type comprising a hub (16), a rim (6) and a plurality of connecting arms (10a, 10b...13a, 13b), each of which has the shape of a very elongated loop, an outer end of which is constantly biased to the rim to which it is assembled advantageously by glueing, with a mass being included within said outer end to cause the desired elongation thereof under the action of the centrifugal force and to ensure constant contact between arms and rim, characterized in that said arms (10a, 10b...13a, 13b) are radial and in that those sides of the loops which constitute them comprise rectilinear portions (1a, 1b), and in that the inner ends (2b) of such arms, being independent of one another, are centered and maintained against centrifugal force through a central element (5, 4a, 4b) belonging to the hub (16).

2. A rotor according to claim 1, characterized in that the connecting arms are realized by winding on a suitable mandrel of composite filamentary materials such as fiber of glass, carbon, polymers, boron, steel or the like.

3. A rotor according to any one of claims 1 or 2, characterized in that each of the arms is constituted by two thin plates (1a, 1b) united at their ends through rounded up elements of elongated shape (2a, 2b), with the longitudinal symmetrical plane of the arm containing the rotational axis of the hub (16).

4. A rotor according to any one of claims 1 or 2, characterized in that each of the arms is constituted by two thin plates (1a, 1b) connected at their ends by rounded up elements of elongated shape (2a, 2b), with the longitudinal symmetrical plane of the arm being perpendicular to the rotational axis of the hub (16).

5. A rotor according to claim 3, characterized in that the end of each arm (2b) on the center side comes to bear onto an adaptive part (3) for resting thereon, said part being parallel to the rotational axis of the hub, being secured by its ends (3a, 3b) into two flanges (4a, 4b) perpendicular to the rotational axis of the hub, and belonging to said hub.

6. A rotor according to claim 4, characterized in that the end of each arm (2b) on the center side comes to bear onto a central circular crown (5) to rest thereon, such crown belonging to the hub and holding the assembly of the rotor arms against the centrifugal force and centering them.

7. A rotor according to claim 6, characterized in that the fixation crown (5) is continuous and one of the ends (2a, 2b) of the arms, preferably that on the side of the rim (6), is opened up to permit introduction of the arms onto the central fixation crown (5) and is then closed again after fixation by glueing to the rim.

8. A rotor according to claim 6, characterized in that a central crown for fixation of the arms is used, constituted from thin elementary half-crowns (9a1, 9a2, 9b1, 9b2...) to permit final assembly with the arms by glueing when said elementary crowns (9a...9n) have been themselves assembled by glueing.

9. A rotor according to any one of claims 3 to 8, characterized in that the arms are provided with strengtheners (9) accommodated between the thin plates (1a, 1b).

10. A rotor according to any one of claims 1 to 9, characterized in that materials are used having longitudinal elasticity modules $E$ and specific masses $\rho$ resulting in different values of the ratio $E/\rho$ for the arms on the one hand, and on the other hand, for the rim, so as to provide elongation of the arm exactly adapted to that of the rim.

11. A rotor according to any one of claims 1 to 9, characterized in that the end of the arm (2a) that comes to bear onto the rim (6) comprises an adaptive part (8) to permit good application thereof and assembling by glueing to the rim (6).

12. A rotor according to any one of claims 1 to 9, characterized in that the end of the arms (2a) that comes to bear onto the rim (6) comprises an adaptive part (20, 21) comprising such a material as to permit compatibility of the connection of the rim (6) subjected to significant circumferential elongation with the end mass (7) of the arm.

13. A rotor according to any one of claims 4 and 6 to 8, characterized in that the central circular crown (5) is machined at appropriate points thereon (5a) to provide respective application surfaces at the inner ends of the arms.

14. A rotor according to any one of claims 1 to 13, characterized in that at least two identical assemblies (10a, 10b) of matched arms (13a, 13b) with a respective assembly at each end of the rim (6) are used where it is required by the height of the rim.

## Patentansprüche

1. Schnell drehender Rotor, insbesondere anwendbar für ein Schwungrad, der Bauart, die eine Nabe (16), einen Radkranz (6) und eine Vielzahl von Verbindungsarmen (10a, 10b ... 13a, 13b) besitzt, von denen jeder die Form einer sehr langen Schleife annimmt, deren eines äußeres Ende beständig gegen den Radkranz anliegt, an welchem es vorzugsweise durch Kleben angebracht ist, wobei eine Masse im Inneren des äußeren Endes enthalten ist in Hinsicht auf die Erzeugung der erwünschten Dehnung unter Einwirkung der Zentrifugalkraft und zum Sicherstellen einer konstanten Berührung zwischen Arm und Radkranz, dadurch gekennzeichnet, daß die Arme (10a, 10b ... 13a, 13b) radial gerichtet sind, und daß die Seitenabschnitte der Schleifen, durch die diese gebildet sind, geradlinige Abschnitte (1a, 1b) besitzen und daß die inneren Enden (2b) der Arme unabhängig voneinander mittels eines Zentralelementes (5, 4a, 4b), welches einen Teil der Nabe (16) bildet, zentriert und gegen die Zentrifulgalkraft gehalten sind.

2. Rotor nach Anspruch 1, dadurch gekennzeichnet, daß die Verbindungsarme durch Wickeln von Faden-Verbundmaterialien an einem entsprechenden Kern gebildet sind, wie Fasern von Glas, von Kohlenstoff, von Polymeren, von Bor, von Stahl oder dergleichen.

3. Rotor nach einem der Ansprüche 1 oder 2, dadurch gekennzeichnet, daß jeder Arm durch zwei dünne Platten (1a, 1b) gebildet ist, die an ihren Enden durch gerundete Elemente (2a, 2b) von länglicher Form vereinigt sind, wobei die Längssymmetrieachse des Armes die Rotationsachse der Nabe (16) enthält.

4. Rotor nach einem der Ansprüche 1 oder 2, dadurch gekennzeichnet, daß jeder Arm durch zwei dünne Platten (1a, 1b) gebildet ist, die an ihren Enden durch gerundete Elemente (2a, 2b) von länglicher Form vereinigt sind, wobei die Längssymmetrieebene des Armes senkrecht auf der Rotationsachse der Nabe (16) steht.

5. Rotor nach Anspruch 3, dadurch gekennzeichnet, daß das zentralseitige Ende (2b) jedes Armes zu seinem Halt an ein zur Rotationsachse der Nabe paralleles Anpaßstück (3) angelegt ist, welches mit seinen Enden (3a, 3b) in zwei zur Rotationsachse der Nabe senkrechten und einen Teil der Nabe bildenden Flanschen (4a, 4b) befestigt ist.

6. Rotor nach Anspruch 4, dadurch gekennzeichnet, daß das zentralseitige Ende (2b) jedes Armes zu seinem Halt an einen zentralen kreisförmigen Ring (5) angelegt ist, der einen Teil der Nabe bildet und der die Armanordnung des Rotors gegen die Zentrifugalkraft hält und sie zentriert.

7. Rotor nach Anspruch 6, dadurch gekennzeichnet, daß der Befestigungsring (5) kontinuierlich ist und daß eines der Enden (2a, 2b) des Armes, vorzugsweise das an der Seite des Radkranzes (6), geöffnet ist, um das Einführen des Armes um den zentralen Befestigungsring (5) zu erlauben, worauf er vor der Befestigung durch Kleben an dem Radkranz wieder geschlossen wird.

8. Rotor nach Anspruch 6, dadurch gekennzeichnet, daß ein zentraler Arm-Befestigungsring benutzt wird, der aus anfänglichen dünnen elementaren Halbringen ($9a_1$, $9a_2$, $9b_1$, $9b_2$ ...) gebildet ist, die den endgültigen Zusammenbau mit den Armen durch Kleben erlauben, wenn die elementaren Ringe (9a ... 9n) miteinander durch Kleben zusammengebaut sind.

9. Rotor nach einem der Ansprüche 3 bis 8, dadurch gekennzeichnet, daß die Arme mit zwischen die dünnen Platten (1a, 1b) eingesetzten Versteifungen (9) ausgerüstet sind.

10. Rotor nach einem der Ansprüche 1 bis 9, dadurch gekennzeichnet, daß einerseits für die Arme und andererseits für den Radkranz Materialien benutzt sind, deren Längs-Elastizitätsmodule E und spezifische Massen $\rho$ unterschiedliche Werte bezüglich des Verhältnisses $E/\rho$ aufweisen, um eine Verlängerung der Arme sicherzustellen, die genau an diejenige des Radkranzes angepaßt ist.

11. Rotor nach einem der Ansprüche 1 bis 9, dadurch gekennzeichnet, daß das Ende (2a) des Armes vor dem Anlegen gegen den Radkranz (6) ein Anpaßstück (8) umfaßt, welches ein gutes Abstützen und einen Zusammenbau durch Kleben mit dem Radkranz (6) zuläßt.

12. Rotor nach einem der Ansprüche 1 bis 9, dadurch gekennzeichnet, daß das Ende (2a) des Armes vor dem Anlegen gegen den Radkranz (6) ein Anpaßstück (20, 21) umfaßt, das ein Material enthält, das die Verträglichkeit der Verbindung zwischen dem Radkranz (4), welcher eine wichtige Umfangsverlängerung erfährt, und der Masse des Endes (7) des Armes sicherzustellen erlaubt.

13. Rotor nach einem der Ansprüche 4 und 6 bis 8, dadurch gekennzeichnet, daß ein zentraler kreisförmiger Ring (5) an den zugehörigen Stellen (5a) benutzt ist, um als jeweilige Stützfläche für die inneren Enden der Arme zu dienen.

14. Rotor nach einem der Ansprüche 1 bis 13, dadurch gekennzeichnet, daß, falls die Höhe des Radkranzes es erfordert, mindestens zwei identische Anordnungen (10a, 10b) von Gerätearmen (13a, 13b) benutzt sind, je eine Anordnung an jedem Ende des Radkranzes (6).

$$\left(\frac{\Delta R}{R}\right)j$$

$j$

$$\left(\frac{\Delta R}{R}\right)b$$

V

A

O   R   B

b

V

**FIG.1**

C

P

j

b

**FIG.2**

$ma_1$

$j$

t

$b_1$

$b_2$

man

mo

b

$m_{an}$

e

$m_{a2}$

cd

**FIG.3**

1

FIG.4

FIG.5

0 063 074

FIG.7

FIG.6

FIG.8

0 063 074

FIG.9

FIG.10

FIG.11

FIG.12

FIG.13

FIG.14

FIG.15

FIG.16

FIG.18

FIG.17